# EUROPÄISCHE PATENTSCHRIFT

(11) **EP 3 731 043 B1**
(45) Veröffentlichungstag und Bekanntmachung des Hinweises auf die Patenterteilung: **07.05.2025**
(21) Anmeldenummer: 20162466.5
(22) Anmeldetag: 11.03.2020
(51) Int. Cl.: G05B 19/042, G06F 21/57

(54) **VERFAHREN ZUR SICHERHEITSBEURTEILUNG, COMPUTERPROGRAMM, MASCHINENLESBARES SPEICHERMEDIUM UND SICHERHEITSBEURTEILUNGSEINRICHTUNG**
SAFETY ASSESSMENT METHOD, COMPUTER PROGRAM, MACHINE-READABLE STORAGE MEDIUM, AND SAFETY ASSESSMENT DEVICE
PROCÉDÉ D'ÉVALUATION DE LA SÉCURITÉ, PROGRAMME INFORMATIQUE, SUPPORT D'ENREGISTREMENT LISIBLE PAR MACHINE ET DISPOSITIF D'ÉVALUATION DE LA SÉCURITÉ

(30) Priorität: 25.04.2019 DE 102019205915
(43) Veröffentlichungstag der Anmeldung: 28.10.2020
(73) Patentinhaber: Robert Bosch GmbH, 70442 Stuttgart (DE)
(72) Erfinder: Vorderer, Marian Marcel, 71277 Rutesheim (DE); Schroeck, Sebastian, 71263 Weil Der Stadt (DE); Koo, Chee Hung, 70439 Stuttgart (DE)

(56) Entgegenhaltungen:
- EP-A1- 3 098 673
- DE-A1- 102004 020 994
- DE-A1- 102008 044 018
- CHANG KWANGPIL ET AL: "Uncertainty analysis for target SIL determination in the offshore industry", JOURNAL OF LOSS PREVENTION IN THE PROCESS INDUSTRIES, ELSEVIER, UNITED KINGDOM, vol. 34, 26 January 2015 (2015-01-26), pages 151 - 162, XP029155189, ISSN: 0950-4230, DOI: 10.1016/J.JLP.2015.01.030
- "IEC 61936-1 ED3: Power installations exceeding 1 kV AC and 1,5 kV DC - Part 1: AC", 25 January 2019 (2019-01-25), pages 1 - 106, XP082014379, Retrieved from the Internet <URL:https://www.iec.ch/cgi-bin/restricted/getfile.pl/99_226e_CD.pdf?dir=99&format=pdf&type=_CD&file=226e.pdf> [retrieved on 20190125]

## Beschreibung

### Stand der Technik

Es wird ein Verfahren zur Sicherheitsbeurteilung einer Produktionsanlage vorgeschlagen, wobei die Produktionsanlage Anlagenmodule aufweist und die Anlagenmodule austauschbar und/oder ergänzbar sind.

Aufgrund immer kürzer werdender Innovationszyklen müssen Fertigungs- und Produktionsanlagen wandlungsfähig ausgebildet sein. Hierzu ist die Montage, das Austauschen und/oder Ergänzen von Teilen der Anlage, insbesondere sogenannter Anlagenmodule, besonders wichtig.

Die Druckschrift EP 3 098 673 A1, die den nächstkommenden Stand der Technik bildet, betrifft eine automatische Validierung von Sicherheitsfunktionen eines mit Teilsystem-Modulen modular aufgebauten Sicherheitssystems. Sicherheitsrelevante Soll-Kennwerte eines Systems, welches ein aus wenigstens zwei Teilsystem-Modulen modular aufzubauendes oder aufgebautes Sicherheitssystem ausbildet, insbesondere von Restfehlerwahrscheinlichkeiten, Ausfallraten und/oder Gesamtreaktionszeiten, werden in maschinenlesbarer Form im Speicher einer Überprüfungseinrichtung hinterlegt und lokale, modulspezifische sicherheitsrelevante Ist-Kennwerte zumindest eines jeden einzelnen Teilsystem-Moduls, welches zum modularen Aufbau des Sicherheitssystems des Systems eingesetzt wird oder eingesetzt werden soll, werden in maschinenlesbarer Form im jeweiligen Teilsystem-Modul hinterlegt. Anschließend werden die sich ergebenden, übergreifenden sicherheitsrelevanten Ist-Kennwerte mit den im Speicher der Überprüfungseinrichtung hinterlegten Soll-Kennwerten des Systems durch die Überprüfungseinrichtung verglichen und in Abhängigkeit des Vergleichsergebnisses automatisch ein Reaktionssignal generiert.

Die Druckschrift DE 10 2008 044018 A1, beschreibt ein Verfahren, bei dem zum Bestimmen einer Sicherheitsstufe in einem Automatisierungsnetzwerk mit Teilnehmern die daten- und ablauftechnische Verknüpfung zwischen den Teilnehmern im Automatisierungsnetzwerk und die teilnehmerspezifischen Sicherheitskenndaten selbsttätig ermittelt werden. Die Sicherheitsstufe im Automatisierungsnetzwerk wird dann mithilfe einer Berechnungsvorschrift, die die ermittelten daten- und ablauftechnischen Verknüpfungen der Teilnehmer im Automatisierungsnetzwerk und die ermittelten teilnehmerspezifischen Sicherheitskenndaten verbindet, berechnet.

Die Druckschrift DE 10 2004 020994 A1 betrifft ein Verfahren zum computergestützten Konstruieren einer sicherheitsgerichteten elektrischen Schaltung, wobei das Verfahren folgende Schritte aufweist: Bereitstellen einer Vielzahl von Schaltungskomponenten in einer computerimplementierten Bibliothek; computergestütztes Auswählen von Schaltungskomponenten aus der computerimplementierten Bibliothek; und computergestütztes Verknüpfen der ausgewählten Schaltungskomponenten.

Die Druckschrift CHANG KWANGPIL ET AL: "Uncertainty analysis for target SIL determination in the offshore industry ", Jourmal of loss prevention in the process industries, Elsvier, United Kingdom, Bd. 34, 26. Januar 2015, Seiten 151-162, XP029155189, beschäftigt sich mit dem Problem der Behandlung von Unsicherheiten in der Phase der Sicherheits-Integritätslevel (SIL) Bestimmung sowie einen praktischen Ansatz für die Offshore-Industrie. Insbesondere wurden die Risikograph-Methode, LOPA und die minimale SIL-Anforderung in OLF 070 (OIL AND GAS APPLICATION OF IEC 61508 AND IEC 61511) eingeführt und im Hinblick auf die Analyse der Unsicherheit, die ihre SIL-Ergebnisse beeinflusst, untersucht.

In der Druckschrift IEC 619362-1 ED3 werden Standards zu elektrischen Hochspannungs-Installationen offenbart. Hierbei wird auf ein Gebäude in der Nähe von Hochspannungsleitungen bzw. Hochspannungs-Transformatorstationen eingegangen. Es werden Sicherheitsabstände zu Personen, Hauswänden und Dächern dargestellt, die minimal einzuhalten sind. Als eine Sicherheitsmaßnahme neben anderen ist aufgeführt: Direkter Kontakt vermeiden (z.B. mittels Absperrungen bzw. Geländern, Reduzierung von Feuchtigkeit bzw. Luftfeuchtigkeit). Die Druckschrift offenbart Sicherheitsabständen von elektrischen Hochspannungs-Installationen zu Wänden die bei der Planung und Realisierung von stationären Hochspannungs-Installationen einzuhalten sind.

Die Druckschrift DE 2016 204 174 A1 beschreibt eine Automatisierungsanlage zur Automatisierung von Fertigungsschritten, Produktionsschritten und Anwendungen. Die Automatisierungsanlage umfasst dabei mindestens ein Funktionsmodul und mindestens eine Auswerteeinheit, wobei das Funktionsmodul in einem Anlagenbereich anordenbar ist und das Funktionsmodul eine Sensoreinheit zum Aufnehmen von Umgebungsdaten umfasst, wobei die Auswerteeinheit ausgebildet ist, die Position des Funktionsmoduls im Anlagenbereich zu bestimmen.

### Offenbarung der Erfindung

Es wird ein Verfahren zur Sicherheitsbeurteilung einer Produktionsanlage mit den Merkmalen des Anspruchs 1 vorgeschlagen. Ferner wird ein Computerprogramm zur Durchführung des Verfahrens, ein maschinenlesbares Speichermedium und eine Sicherheitsbeurteilungseinrichtung vorgeschlagen. Bevorzugte und/oder vorteilhafte Ausführungsformen der Erfindung ergeben sich aus den Unteransprüchen, der Beschreibung und/oder den beigefügten Figuren.

Es wird ein Verfahren zur Sicherheitsbeurteilung einer Produktionsanlage vorgeschlagen. Die Sicherheitsbeurteilung ist beispielsweise als eine Überprüfung auf das Einhalten eines geforderten Sicherheitsniveaus ausgebildet. Insbesondere ist die Sicherheitsbeurteilung als eine Sicherheitsrelevanz auf eine Umgebung, auf Bestandteile der Produktionsanlage und/oder Interaktion mit Personen zu verstehen. Das Verfahren dient insbesondere dazu, eine Konfigurationsänderung und/oder Systemänderung der Produktionsanlage einer Risikobeurteilung und/oder Sicherheitsbeurteilung zu unterziehen. Insbesondere ist das Verfahren als eine Software ausführbar und/oder umsetzbar. Die Produktionsanlage ist beispielsweise zur Herstellung, Montage, Überprüfung und/oder Transport eines Gegenstandes, insbesondere Bauteils, ausgebildet. Insbesondere ist die Produktionsanlage eine wandlungsfähige und/oder anpassbare Produktionsanlage.

Die Produktionsanlage umfasst mindestens ein Anlagenmodul. Vorzugsweise umfasst die Produktionsanlage eine Mehrzahl an Anlagenmodulen. Die Produktionsanlage weist insbesondere einen Anlagenraum auf, welcher beispielsweise als ein Teilbereich einer Fabrik und/oder Fabrikanlage ausgebildet sein kann. Die Anlagenmodule sind anordenbar im Anlagenraum. Insbesondere sind die Anlagenmodule frei anordenbar im Anlagenraum. Die Anlagenmodule einer Produktionsanlage sind im Speziellen austauschbar, ergänzbar und/oder verschiebbar. Beispielsweise kann eine Produktionsanlage durch weitere Anlagenmodule ergänzt werden, ein Anlagenmodul der Produktionsanlage kann durch ein dergleichen oder anderweitiges Anlagenmodul ausgetauscht werden und/oder die Anlagenmodule können im Anlagenraum verschoben und/oder neu angeordnet werden. Die Anlagenmodule weisen vorzugsweise eine Prozessfunktion, insbesondere zur Produktion, Bearbeitung und/oder zum Transport des Bauteils, auf. Die Anlagenmodule als Roboteranlagen ausgebildet sind, beispielsweise als ein Mehrachsroboter. Die Anlagenmodule können stationär oder mobil ausgebildet sein. Durch das Austauschen, Ergänzen und/oder Neuanordnen der Anlagenmodule kann die Produktionsanlage als wandlungsfähig ausgebildet werden. Die Anlagenmodule bilden im Speziellen Plug-and-Produce-Anlagenmodule. Besonders bevorzugt ist es, dass die Anlagenmodule ausgebildet sind, Anlagenmoduldaten bereitzustellen, wobei die Anlagenmoduldaten beispielsweise selbstbeschreibende Daten, beispielsweise ihre Funktionalität oder Fähigkeit umfassen, und/oder prozessbezogene Parameter.

Das Verfahren sieht ein Sammeln von Anlagenmoduldaten, Prozessdaten und Umgebungsdaten vor. Insbesondere erfolgt das Sammeln der Anlagenmoduldaten, der Prozessdaten und der Umgebungsdaten während der Laufzeit der Produktionsanlage und/oder der Anlagenmodule. Insbesondere erfolgt das Sammeln der Anlagenmoduldaten, der Prozessdaten und der Umgebungsdaten kontinuierlich. Anlagenmoduldaten sind beispielsweise eine Selbstbeschreibung der Anlagenmodule. Als Prozessdaten können beispielsweise Daten verstanden werden, die zur Durchführung der Produktion und/oder Tätigkeiten in der Produktionsanlage nötig sind und/oder einzustellen sind. Beispielsweise können Prozessdaten einen Ablauf der durchzuführenden Schritte zur Produktion umfassen. Umgebungsdaten sind beispielsweise Daten zum Anlagenraum, zu Hindernissen und/oder Geometrien darin. Beispielsweise können Umgebungsdaten Informationen zu Wänden, und/oder zu Anordnungen der Produktionsanlagen zueinander umfassen. Insbesondere erfolgt das Sammeln der Anlagenmoduldaten, Prozessdaten und/oder Umgebungsdaten maschinell, beispielsweise mittels einer Software und/oder einem Computer. Beispielsweise erfolgt das Sammeln der Anlagenmoduldaten und der Prozessdaten und der Umgebungsdaten zentral, wobei das zentrale Sammeln für mehrere Anlagenmodule der Prozessanlage erfolgt.

Das Verfahren sieht als Verfahrensschritt eine Analyse der gesammelten Daten vor. Die Analyse der gesammelten Daten erfolgt zur Sicherheitsbeurteilung der Produktionsanlage, insbesondere zur Sicherheitsbeurteilung der vorliegenden und/oder aktuellen Konfiguration der Produktionsanlage. Die gesammelten Daten umfassen insbesondere die Anlagenmoduldaten, die Prozessdaten und/oder die Umgebungsdaten. Als vorliegende Konfiguration wird eine Anordnung und/oder die Gesamtheit der Anlagenmodule der Produktionsanlage zum jeweiligen Zeitpunkt verstanden. Als jeweiliger Zeitpunkt kann insbesondere ein Zeitintervall verstanden werden, wobei ein Zeitintervall in ein anderes Zeitintervall dann übergeht, wenn eine Änderung der Anordnung, der umfassenden Anlagenmodule und/oder anderer spezifischer Parameter der Produktionsanlage vorgenommen werden. Beispielsweise kann durch Ergänzen eines Anlagenmoduls von einer vorliegenden Konfiguration in eine neue vorliegende Konfiguration ausgegangen werden. Durch Analyse und/oder Auswertung der gesammelten Daten wird beispielsweise bewertet, ob die Anordnung und/oder die Produktionsanlage sicherheitstechnisch betreibbar ist und/oder ob gegen Sicherheitsnormen verstoßen wird. Beispielsweise betrifft die Sicherheitsbeurteilung, ob von Beschädigungen der Anlagenmodule auszugehen ist und/oder ob Personen durch Betrieb der Produktionsanlage und/oder Anlagenmodule gefährdet sind. Ferner kann die Sicherheitsbeurteilung eine elektrische Sicherheitsbeurteilung umfassen, eine Datenschutzsicherheitsbeurteilung, eine Explosionsschutzbeurteilung, und/oder eine strahlenschutzsicherheitstechnische Beurteilung. Insbesondere kann die Sicherheitsbeurteilung darauf hinauszielen, dass einem Benutzer mitgeteilt wird, wie die vorliegende Konfiguration anzupassen ist und/oder ob zu optimieren ist, dass die Sicherheitsbeurteilung besser wird und/oder keine Schäden oder Gefahren vorliegen. Die Analyse der gesammelten Daten kann beispielsweise kontinuierlich erfolgen, alternativ und/oder ergänzend kann die Analyse der gesammelten Daten durch Änderung der vorliegenden Konfiguration getriggert werden, sodass für eine Änderung der vorliegenden Konfiguration eine erneute Analyse stattfindet. Besonders bevorzugt ist es, dass die Analyse der gesammelten Daten während der Laufzeit der Produktionsanlage erfolgt. Die Analyse der gesammelten Daten erfolgt vorzugsweise computergestützt und/oder softwareimplementiert.

Das Verfahren sieht vor, dass bei der Integration, einem Austausch und/oder einem Verändern eines Anlagenmoduls während der Laufzeit der Produktionsanlage automatisch eine Sicherheitsbeurteilung der geänderten Produktionsanlage erfolgt. Beispielsweise wird detektiert, dass es zu einem Austausch, einem Ergänzen, einem Hinzufügen, auch Integration genannt und/oder einer räumlichen Veränderung eines Anlagenmoduls gekommen ist, sodass eine geänderte Produktionsanlage und/oder geänderte Konfiguration vorliegt, wobei dadurch eine erneute Analyse zur Sicherheitsbeurteilung erfolgt.

Insbesondere kann das Austauschen, Ergänzen und/oder Wegnehmen eines Anlagenmoduls als geänderte Produktionsanlage und/oder neue Konfiguration verstanden werden.

Damit wird ein Verfahren bereitgestellt, welches besonders auf wandlungsfähige und/oder Plug-and-Produce-Produktionsanlagen ausgerichtet ist, sodass eine schnelle Sicherheitsbeurteilung erfolgen kann. Insbesondere werden die Verfahrensschritte mittels einer Software und/oder eines Rechners durchgeführt, sodass langwierige personenbezogene und personalintensive Sicherheitsbeurteilungen reduziert werden können. Insbesondere erfolgt die Sicherheitsbeurteilung während der Produktion und Laufzeit der Produktionsanlage, sodass Veränderungen instantan berücksichtigt werden.

Somit wird das Problem gelöst, dass Systemanpassungen und/oder Systemänderungen einer Produktionsanlage bisher nur sehr zeitaufwändig geprüft werden konnten und hohes Personen-Knowhow nötig war. Die vorliegende Erfindung stellt ein Konzept bereit, welches als Softwarelösung ein Verfahren durchführen kann, das eine Risikobeurteilung für die wandlungsfähige Produktionsanlage ermöglicht. Das Konzept umfasst dabei die Analyse des Sicherheitsniveaus anhand der automatisch gesammelten Daten, um daraus beispielsweise den Sicherheitsstand der neu konfigurierten Gesamtanlage zu bestimmen.

Eine Ausgestaltung der Erfindung sieht vor, dass die Anlagenmoduldaten, die Prozessdaten und/oder die Umgebungsdaten als wiederverwendbare und/oder standardisierte Datensätze ausgebildet sind. Als standardisierte und/oder wiederverwendbare Datensätze werden beispielsweise Datensätze verstanden, die eine gemeinsame, einheitliche und/oder ähnliche Datenstruktur aufweisen. Beispielsweise umfassen und/oder beschreiben die Anlagenmoduldaten Sicherheitsfunktionen für die Anlagenmodule und/oder weisen sicherheitsrelevante Informationen der Anlagenmodule auf. Die Prozessdaten umfassen und/oder beschreiben beispielsweise Sicherheitsfunktionen und/oder sicherheitsrelevante Informationen der Prozesse und/oder der Funktionen. Beispielsweise können die Prozessdaten Informationen zur Interaktion zwischen mehreren Anlagenmodulen aufweisen. Die Umgebungsdaten weisen beispielsweise Sicherheitsinformationen bezüglich der Umgebung auf, beispielsweise Informationen zu Bereichen, wo sich Personen befinden können und/oder wo Hindernisse angeordnet sein können und/oder sind.

Optional ist es vorgesehen, dass einem Benutzer Anzeigedaten grafisch angezeigt werden. Die Anzeige erfolgt beispielsweise auf einer Anzeigeeinheit, beispielsweise einem Display und vorzugsweise auf einem Touchscreen. Die Anzeigedaten werden beispielsweise mittels eines GUI angezeigt. Die Anzeige erfolgt vorzugsweise softwareimplementiert. Die Anzeigedaten können auch alphanummerisch grafisch angezeigt werden. Die Anzeigedaten umfassen beispielsweise die Sicherheitsbeurteilung, sodass insbesondere dem Benutzer das Ergebnis der Analyse und/oder die Sicherheitsbeurteilung bereitgestellt und angezeigt wird. Insbesondere kann das Anzeigen und/oder können die Anzeigedaten auch als eine 3D-Ansicht der Produktionsanlage ausgebildet sein. Beispielsweise kann durch die 3D-Ansicht ein Benutzer sicherheitsrelevante Informationen optisch schnell erkennen. Insbesondere kann es auch vorgesehen sein, dass die 3D-Ansicht der Produktionsanlage die Sicherheitsbeurteilungen umfasst, sodass diese beispielsweise in der 3D-Ansicht und/oder dem Modell angezeigt werden. Ferner können die Anzeigedaten Verbesserungsvorschläge umfassen, beispielsweise wie die Sicherheitsbeurteilung verbessert werden kann. Die Anzeigedaten können insbesondere auch Kontextinformationen umfassen. Die Kontextinformation ist beispielsweise die Anwendung und/oder die Information, welche Norm zur Analyse der Daten verwendet wird. Beispielsweise kann die Kontextinformation umfassen, welche DIN-Norm angewendet wird und/oder welche sicherheitsrelevanten Aspekte geprüft werden, zum Beispiel, ob elektrische Sicherheit oder Exklusionssicherheit geprüft wird. Ferner können die Anzeigedaten Auswahloptionen umfassen. Beispielsweise können dem Benutzer Optionen angezeigt werden, die er auswählen kann, beispielsweise Auswahloptionen an Kontextinformationen und/oder welche Kontextinformation anzuwenden ist. Ferner können die Anzeigedaten Datenbankinformationen umfassen, beispielsweise auf welche Informationen und/oder Datenbanken zugegriffen wird und/oder zugegriffen werden kann.

Insbesondere ist es vorgesehen, dass Benutzerprofile auswählbar, festlegbar und/oder speicherbar sind. Die Benutzerprofile können auf einzelne Benutzer festgelegt und/oder gerichtet sein, alternativ und/oder ergänzend können die Benutzerprofile auf Benutzergruppen gerichtet sein, beispielsweise unterschiedliche Sicherheitskräfte und/oder Sicherheitsexperten und/oder Personen mit unterschiedlichem Erfahrungsgrad (Laie, Operator mit Schulung, Ingenieure, Ingenieure mit Sicherheitshintergrund usw.), beispielsweise unterschiedlicher Bereiche wie Elektro oder Explosionsschutz. Insbesondere ist es vorgesehen, dass die Anzeigedaten und/oder die anzuzeigenden Anzeigedaten mit den Benutzerprofilen zusammenhängen. Beispielsweise ist einem Benutzerprofil zugeordnet, welche der Anzeigedaten und/oder welche Teile der Anzeigedaten anzuzeigen sind. Die anzuzeigenden Anzeigedaten können dabei persönlich festlegbar sein, beispielsweise initial und/oder durch Auswahl. Alternativ können die anzuzeigenden Anzeigedaten für die Benutzerprofile voreingestellt sein und/oder durch maschinelles Lernen angepasst sein.

Beispielsweise kann der Benutzer sein Benutzerprofil auswählen, wobei dem Benutzer dann die entsprechenden Anzeigedaten angezeigt werden. Durch das Anzeigen der anzuzeigenden Anzeigedaten kann der Benutzer insbesondere weitere Zusatzdaten auswählen und/oder anzeigen lassen.

Besonders bevorzugt ist es, dass die gesammelten Daten gespeichert werden. Insbesondere werden die gesammelten Daten zur zugehörigen vorliegenden Konfiguration gespeichert. Beispielsweise werden bei Änderung der vorliegenden Konfiguration die zu sammelnden Daten in einem neuen und/oder weiteren Datensatz gespeichert. Beispielsweise werden die gesammelten Daten zu der Konfiguration gespeichert. Insbesondere können die gesammelten Daten zu der Sicherheitsbeurteilung gespeichert werden, beispielsweise ist so nachvollziehbar, wie sich die Sicherheitsbeurteilung bestimmt hat. Insbesondere kann für die vorliegende Konfiguration und/oder für jede vorgelegene und/oder geänderte Konfiguration die zugehörige Sicherheitsbeurteilung gespeichert werden. Beispielsweise kann so von einem Benutzer für eine bereits vorgelegene Konfiguration die Sicherheitsbeurteilung geladen werden. Dieser Ausgestaltung liegt die Überlegung zugrunde, ein Verfahren bereitzustellen, welches sich einfach und effizient in ein Qualitätsmanagementsystem integrieren lässt.

Eine Ausgestaltung der Erfindung sieht vor, dass die Analyse der gesammelten Daten zur Sicherheitsbeurteilung mindestens einen, vorzugsweise mehrere Analyseschritte umfasst. Die Analyseschritte sind und/oder die Reihenfolge der Durchführung der Analyseschritte ist in Analysemodulen hinterlegt. Das Analysemodul beschreibt beispielsweise, welche Analyseschritte zur Analyse der gesammelten Daten zur Sicherheitsbeurteilung durchzuführen sind. Die Analysemodule sind vorzugsweise gespeichert und/oder speicherbar. Analysemodule können beispielsweise unterschiedliche Analysen betreffen, beispielsweise die Analyse der Daten zur Beurteilung der elektrischen, mechanischen, strahlenschutzrechtlichen oder Explosionsschutzsicherheitsbeurteilung. Insbesondere ist von einem Benutzer ein anzuwendendes Analysemodul auswählbar. Beispielsweise sind dem Benutzer relevante und/oder alle Analysemodule angezeigt, wobei der Benutzer das anzuwendende Analysemodul auswählt. Insbesondere kann dem Benutzer eine Vorauswahl der Analysemodule bereitgestellt sein, sodass beispielsweise nur Analysemodule angezeigt werden, die für die vorliegenden gesammelten Daten sinnvoll und/oder möglich sind.

Besonders bevorzugt ist es, dass die Analyse der gesammelten Daten mit den Analyseschritten erfolgt, wobei die Analyseschritte wie oben dargestellt in Analysemodulen hinterlegt sind. Die Auswahl der anzuwendenden Analysemodule und/oder des anzuwendenden Analysemoduls erfolgt vorzugsweise automatisch, insbesondere in Form einer Vorauswahl, die von einem Benutzer verifiziert werden muss. Beispielsweise erfolgt die automatische Auswahl des anzuwendenden Analysemoduls basierend auf Kontextinformationen. Die Kontextinformationen beschreiben beispielsweise die Produktionsanlage und/oder die teilnehmenden Anlagenmodule. Beispielsweise ist bekannt, dass ein teilnehmendes Anlagenmodul ein erhöhtes elektrisches Gefahrenpotential aufweist, sodass die Kontextinformation beispielsweise darauf zielt, die gesammelten Daten auf elektrische Sicherheit zu untersuchen. Insbesondere kann die automatische Auswahl der anzuwendenden Analysemodule durch Verwendung eines neuronalen Netzes und/oder Machine-Learning-Algorithmen erfolgen und/oder verbessert werden.

Erfindungsgemäß ist es vorgesehen, dass die Analyse der gesammelten Daten mittels einer rechnergestützten Simulationseinrichtung erfolgt. Im Speziellen erfolgt die Analyse der gesammelten Daten mit einer Physikmaschine, im Englischen und/oder fachsprachlich auch Physics-Engine genannt. Erfindungsgemäß erfolgt die Simulation in einer 3D-Szene und/oder in einem 3D-Modell der Produktionsanlage. Beispielsweise können zur Analyse der gesammelten Daten mittels der Simulationseinrichtung das Analysemodul und/oder eine des Analysemoduls simuliert werden, beispielsweise in Form von Differenzialgleichungen. Die Simulation und/oder die Analyse mit der Simulationseinrichtung erfolgen beispielsweise unter Verwendung bekannter physikalischer, chemischer und/oder mechanischer Gesetze. Im Speziellen kann die Analyse der gesammelten Daten unter Simulation der Funktionen der Anlagenmodule erfolgen, beispielsweise basierend auf den Anlagenmoduldaten, der Prozessdaten und/oder den Umgebungsdaten.

Im Speziellen ist es vorgesehen, dass die Sicherheitsbeurteilung einem Benutzer bereitgestellt und/oder angezeigt wird. Die Sicherheitsbeurteilung ist von einer Person oder von mehreren Personen freizugeben und/oder abzulehnen. Insbesondere kann die Sicherheitsbeurteilung nachgebessert und/oder verbessert werden. Im Speziellen ist es vorgesehen, dass die Sicherheitsbeurteilung von unabhängigen Personen und/oder Personengruppen freizugeben und/oder abzulehnen ist, sodass eine zusätzliche Sicherheit erzielt wird.

Erfindungsgemäß sind die Verfahrensschritte softwareimplementiert. Beispielsweise wird das Verfahren und/oder werden die Verfahrensschritte von einer Software durchgeführt. Die Durchführung des Verfahrens und/oder der Verfahrensschritte als Softwareimplementierung kann beispielsweise auf einem Rechner, einem Prozessor oder Computer erfolgen.

Einen weiteren Gegenstand der Erfindung bildet ein Computerprogramm. Das Computerprogramm ist ausgebildet, das Verfahren wie vorher beschrieben durchzuführen, wenn das Computerprogramm auf einem Rechner, einem Computer, einem Prozessor und/oder einer Sicherheitsbeurteilungseinrichtung ausgeführt wird.

Einen weiteren Gegenstand der Erfindung bildet ein maschinenlesbares Speichermedium, wobei das Speichermedium das beschriebene Computerprogramm umfasst. Insbesondere ist das Computerprogramm wie vorher beschrieben auf dem maschinenlesbaren Speichermedium gespeichert. Das maschinenlesbare Speichermedium bildet beispielsweise eine CD, eine DVD, einen Speicherchip und/oder USB-Stick.

Einen weiteren Gegenstand der Erfindung bildet eine Sicherheitsbeurteilungseinrichtung zur Sicherheitsbeurteilung einer Produktionsanlage. Die Sicherheitsbeurteilungseinrichtung ist beispielsweise als eine zentrale Einrichtung ausgebildet, beispielsweise als eine Rechnereinheit. Die Produktionsanlage ist insbesondere ausgebildet wie vorher beschrieben und/oder umfasst mindestens ein, vorzugsweise mehrere Anlagenmodule. Die Anlagenmodule der Produktionsanlage sind austauschbar, räumlich veränderlich anordenbar und/oder ergänzbar. Beispielsweise kann der Produktionsanlage ein Anlagenmodul hinzugefügt werden, entfernt werden, oder die Anlagenmodule werden räumlich anders arrangiert, sodass andere Produktionen und/oder Prozessschritte durchführbar sind.

Die Sicherheitsbeurteilungseinrichtung weist eine Datenschnittstelle zur datentechnischen Kopplung mit mindestens einem der Anlagenmodule, vorzugsweise mit mehreren oder allen Anlagenmodulen der Produktionsanlage auf. Die Datenschnittstelle kann eine virtuelle Schnittstelle sein, alternativ und/oder ergänzend ist die Datenschnittstelle als eine reale Schnittstelle, beispielsweise als eine Funkschnittstelle, oder Kabelschnittstelle ausgebildet. Über die Datenschnittstelle sind der Sicherheitsbeurteilungseinrichtung insbesondere Anlagenmoduldaten, Prozessdaten und/oder Umgebungsdaten bereitstellbar. Beispielsweise kann das Anlagenmodul seine Funktionen, Fähigkeiten und/oder Gefahrenpotentiale als Anlagenmoduldaten so an die Sicherheitsbeurteilungseinrichtung bereitstellen.

Die Sicherheitsbeurteilungseinrichtung weist ein Auswertemodul auf. Das Auswertemodul kann als ein Hardware- oder als ein Softwaremodul ausgebildet sein. Das Auswertemodul ist ausgebildet, das Verfahren wie vorher beschrieben und/oder Verfahrensschritte des Verfahrens durchzuführen. Beispielsweise ist das Auswertemodul ausgebildet, mittels der Datenschnittstelle Daten zu sammeln, beispielsweise die Anlagenmoduldaten zu sammeln, Prozessdaten zu sammeln und/oder Umgebungsdaten zu sammeln. Ferner ist das Auswertemodul beispielsweise ausgebildet, die gesammelten Daten zu analysieren und eine Sicherheitsbeurteilung der vorliegenden Konfiguration, insbesondere der Produktionsanlage, durchzuführen. Insbesondere ist die Sicherheitsbeurteilungseinrichtung ausgebildet, die Analyse und/oder das Sammeln der Daten während der Laufzeit der Produktionsanlage durchzuführen. Im Speziellen ist die Sicherheitsbeurteilungseinrichtung ausgebildet, eine Veränderung der vorliegenden Konfiguration festzustellen, beispielsweise, weil ein Anlagenmodul ausgetauscht, ergänzt oder ersetzt wurde und/oder weil Anlagenmodule räumlich anders angeordnet wurden, und nach dieser Detektion weiter Daten zu sammeln und diese gesammelten Daten erneut einer Sicherheitsbeurteilung zu unterziehen und diese Daten zu analysieren.

Damit wird eine Sicherheitsbeurteilungseinrichtung bereitgestellt, die Veränderungen in einer Produktionsanlage detektieren kann und schnell und einfach eine Sicherheitsbeurteilung durchführen kann, beispielsweise indem die gesammelten Daten rechnergestützt ausgewertet und beurteilt werden. Im Speziellen kann eine dauerhafte Sicherheitsbeurteilung im Betrieb der Produktionsanlage ermöglicht werden.

Besonders bevorzugt ist es, dass die Sicherheitsbeurteilungseinrichtung eine Anzeigeeinheit zum Anzeigen von Anzeigedaten aufweist. Die Anzeigeeinheit ist vorzugsweise als ein Bildschirm, im Speziellen als ein Touchscreen, ausgebildet. Insbesondere kann mittels der Anzeigeeinheit ein Benutzer die Sicherheitsbeurteilung bewerten, akzeptieren, anpassen oder ablehnen. Die Anzeigeeinheit bildet dabei beispielsweise eine Eingabeeinheit.

Optional ist es vorgesehen, dass die Sicherheitsbeurteilungseinrichtung eine Datenbankschnittstelle aufweist. Die Datenbankschnittstelle kann als eine virtuelle oder als eine reale Schnittstelle ausgebildet sein. Mittels der Datenbankschnittstelle sind Datenbankinformationen der Sicherheitsbeurteilungseinrichtung bereitgestellt und/oder bereitstellbar. Die Datenbankinformationen können beispielsweise anzuwendende Analysemodule, Beispielanalysemodule umfassen. Ferner können die Datenbankinformationen DIN-Normen, Sicherheitsprotokolle, Sicherheitsanforderungen und/oder Zusatzinformationen zur Sicherheitsbeurteilung der Produktionsanlage umfassen.

Weitere Vorteile, Wirkungen und Ausgestaltungen der Erfindung ergeben sich aus den beigefügten Figuren und deren Beschreibung. Dabei zeigen:
- Figur 1: schematisch eine Produktionsanlage und deren Komponenten;
- Figur 2: beispielhafter schematischer Verfahrensablauf;
- Figur 3: weiterer beispielhafter Verfahrensablauf;
- Figur 4: beispielhafte Computerimplementierung des Verfahrens.

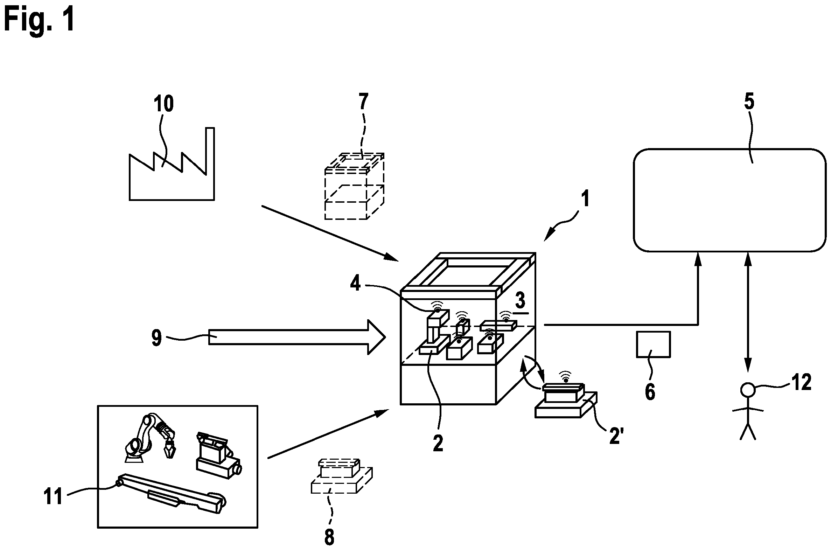

Figur 1 zeigt schematisch eine Produktionsanlage 1. Die Produktionsanlage 1 umfasst eine Mehrzahl an Anlagenmodulen 2. Die Anlagenmodule 2 sind in einem Anlagenraum 3 angeordnet. Die Produktionsanlage 1 ist zur Produktion und/oder Bearbeitung eines Bauteils ausgebildet. Die Anlagenmodule 2 sind modulare Anlagenmodule, die frei anordenbar innerhalb des Anlagenraumes 3 sind. Die Anlagenmodule 2 sind zur Durchführung eines elektrischen, mechanischen oder Messschrittes ausgebildet. Insbesondere sind die Anlagenmodule 2 miteinander interagierbar betreibbar. Die Anlagenmodule 2 weisen Schnittstellen zum Funkdatenversand 4 auf. Insbesondere sind Anlagenmodule 2, die in der Produktionsanlage 1 teilnehmen, austauschbar gegen weitere, andere und/oder Anlagenmodule 2'.

Damit die Produktionsanlage 1 betreibbar ist, insbesondere arbeitsschutzrechtlich und/oder produktions- oder sicherheitstechnisch, ist die Produktionsanlage 1 auf das Einhalten von Sicherheitsstandards und/oder Sicherheitsniveaus zu überprüfen. Eine solche Überprüfung wird insbesondere als Sicherheitsbeurteilung der Produktionsanlage 1 verstanden. Nachdem sich die Konfiguration beim Austausch eines Anlagenmoduls 2 gegen ein Anlagenmodul 2' oder durch Integration eines weiteren Anlagenmoduls 2' ändert, ist bei einer solchen Änderung die Sicherheitsbeurteilung erneut durchzuführen. Dies erfolgt insbesondere mittels einer Sicherheitsbeurteilungseinrichtung 5. Die Sicherheitsbeurteilungseinrichtung 5 führt ein Verfahren als Softwareapplikation und/oder rechnergeschützt durch. Mittels dieses Verfahrens und/oder durch Anwendung der Sicherheitsbeurteilungseinrichtung 5 kann eine effiziente Sicherheitsbeurteilung, insbesondere mit reduziertem Personalaufwand, erfolgen.

Dazu müssen der Sicherheitsbeurteilungseinrichtung 5 Daten bereitgestellt sein und/oder diese muss diese Daten sammeln. Die zu sammelnden Daten werden insbesondere als gesammelte Daten 6 bezeichnet. Die gesammelten Daten 6 umfassen Umgebungsdaten 7, Anlagenmoduldaten 8 und Prozessdaten 9.

Die Umgebungsdaten sind ein Modell des Anlagenraumes 3. Die Umgebungsdaten 7 sind beispielsweise abhängig von der Umgebung, in der die Produktionsanlage betrieben wird, beispielsweise dem Fabrikraum der Fabrik 10. Die Umgebungsdaten 7 sind datentechnisch der Sicherheitsbeurteilungseinrichtung 5 bereitgestellt.

Die Produktionsanlage 1 umfasst eine Mehrzahl an Anlagenmodulen 2. Die Anlagenmodule 2 umfassen Anlagenmoduldaten 8, die beispielsweise ihre Funktionalität und/oder ihr Gefahrenpotential beschreiben und/oder umfassen. Die Anlagenmoduldaten 8 können als Herstellerdatensatz 11 bereitgestellt werden. Die Anlagenmoduldaten 8 sind der Sicherheitsbeurteilungseinrichtung 5 bereitgestellt.

Die prozessbezogenen Informationen, auch Prozessdaten 9 genannt, sind vom herzustellenden Produkt abhängig. Beispielsweise können die Prozessdaten 9 gefährliche Schritte bei der Produktion beschreiben und/oder umfassen. Die Prozessdaten 9 sind der Sicherheitsbeurteilungseinrichtung 5 bereitgestellt. Insbesondere werden die Prozessdaten 9, die Anlagenmoduldaten 8 und die Umgebungsdaten 7 kontinuierlich der Sicherheitsbeurteilungseinrichtung 5 bereitgestellt. Insbesondere werden diese gesammelten Daten von der Sicherheitsbeurteilungseinrichtung 5 gespeichert.

Die Sicherheitsbeurteilungseinrichtung 5 ist ausgebildet, die gesammelten Daten, hier die Umgebungsdaten 7, die Prozessdaten 9 und die Anlagenmoduldaten 8 zu analysieren und/oder auszuwerten. Das Analysieren der gesammelten Daten dient der Beurteilung des Sicherheitsniveaus der Produktionsanlage in der aktuellen Konfiguration. Dabei wird die Produktionsanlage 1 in der vorliegenden Konfiguration auf das Einhalten von Sicherheitsstandards überprüft, mögliche Gefahrenpotentiale gesucht und gegebenenfalls können Verbesserungsvorschläge unterbreitet werden. Die Analyse- und/oder die Sicherheitsbeurteilung erfolgt insbesondere auf Sicherheitsvorschriften, welche beispielsweis von Datenbankinformationen umfasst sein können.

Die Analyse der gesammelten Daten und die Sicherheitsbeurteilung, durchgeführt von der Sicherheitsbeurteilungseinrichtung 5, führen schließlich zu einer Bereitstellung der Sicherheitsbeurteilung an einen Benutzer 12. Die Sicherheitsbeurteilung ist von dem Benutzer 12 zu überprüfen, zu verifizieren oder abzulehnen. Gegebenenfalls kann die Sicherheitsbeurteilung ausgebessert, angepasst und/oder verbessert werden von dem Benutzer 12, je nach Situation mit/ohne reale Anpassungen am Anlagenmodul 2, am Prozess 9 oder an der Produktionsanlage 1. Nach Freigabe der Sicherheitsbeurteilung durch den Benutzer 12 kann die Produktionsanlage 1 sicher betrieben werden. Eine Veränderung der Produktionsanlage 1 durch Integration oder Austausch eines Anlagenmoduls 2 führt zu einer erneuten Sicherheitsbeurteilung durch die Sicherheitsbeurteilungseinrichtung 5.

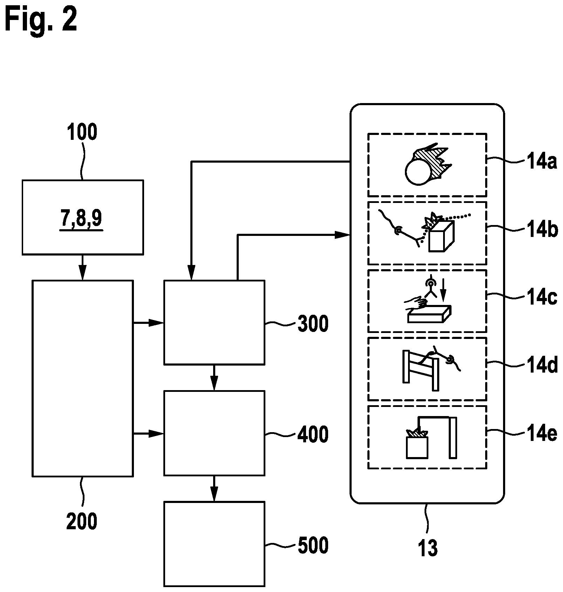

Figur 2 zeigt schematisch eine Abstraktion des erfindungsgemäßen Verfahrens in einem Ausführungsbeispiel. In einem Verfahrensschritt 100 werden die Daten gesammelt. Die Datensammlung bezieht sich dabei auf Umgebungsdaten 7, Anlagenmoduldaten 8 und Prozessdaten 9. Dieses Datensammeln erfolgt insbesondere kontinuierlich.

In einem Auswerteschritt 200 werden die gesammelten Daten analysiert und ausgewertet. Insbesondere kann dabei eine Analyse des Kontextes erfolgen. Basierend auf dieser Analyse können Kontextinformationen erarbeitet werden. In einem Kontextidentifizierungsschritt 300 werden diese Informationen beispielsweise genutzt, um dem Benutzer 12 in einer Anzeige 13 sinnvolle Analysemodule 14a-14e (wobei die Analysemodule erweiterbar sind) anzuzeigen. Die Analysemodule 14a-14e beschreiben beispielsweise unterschiedliche Analysemöglichkeiten der gesammelten Daten auf unterschiedliche Sicherheitsbeurteilungen. Beispielsweise beschreibt das Analysemodul 14a eine Untersuchung auf herumfliegende Objekte und/oder Gegenstände bei Durchführung und/oder bei Betrieb der Produktionsanlage 1. Das Analysemodul 14b beschreibt eine Sicherheitsbeurteilung in Bezug auf die Wegplanung und/oder Trajektorienplanung und/oder Hindernisse. Das Analysemodul 14c beschreibt beispielsweise das Vorhandensein von herabfallenden Objekten und optional ergänzend die Entstehung von neuen Quetsch- und Schnittstellen. Das Analysemodul 14d beschreibt beispielsweise Sicherheitsgefahren hervorgerufen durch Laserstrahlung, Streustrahlung oder Lichtreflexe. Das Analysemodul 14e beschreibt beispielsweise Abstandsprobleme und/oder Engstellen, die zu Sicherheitsproblemen führen können und/oder von Sicherheitsnormen angefordert sind. Der Benutzer 12 kann beispielsweise eines dieser Analysemodule 14a-14e als anzuwendendes Analysemodul auswählen. Dieses Analysemodul wird dem Kontextidentifikationsschritt 300 zugeführt.

In einem Sicherheitsbeurteilungsschritt 400 wird das ausgewählte Analysemodul 14 auf die gesammelten Daten angewendet. Die gesammelten Daten werden beispielsweise von dem Auswerteschritt 200 an den Schritt 400 übergeben. Die Auswertung und/oder die Anwendung des Analysemoduls 14 dient der Bestimmung des Sicherheitslevels und ergibt eine Sicherheitsbeurteilung, die in einem Ausgabeschritt 500 angezeigt wird.

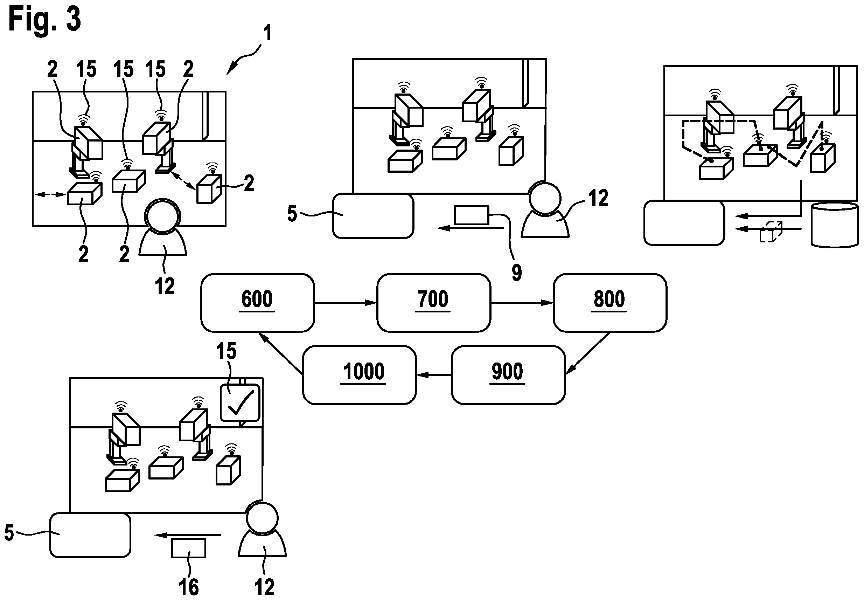

Figur 3 zeigt ein weiteres Ausführungsbeispiel des Verfahrens in einer abstrahierten Darstellung. Das Verfahren umfasst hier fünf Verfahrensschritte 600,700, 800, 900 und 1000. Die Verfahrensschritte 600 bis 1000 werden dabei zyklisch durchlaufen, wobei sich an den Verfahrensschritt 1000 wieder der Verfahrensschritte 600 anschließt. Das Verfahren und die Verfahrensschritte können Software implementiert ausgeführt werden, beispielsweise mittels einer Rechnereinheit oder der Sicherheitsbeurteilungseinrichtung 5.

In dem Verfahren Schritt 600, auch Laufzeit-Integrationsschritt genannt, wird eine Produktionsanlage 1 von einem Benutzer 12 angepasst und/oder verändert. Dabei werden Anlagenmodule 2 beispielsweise ausgetauscht und/oder neu aufgenommen. Die Anlagenmodule 2 übernehmen Produktionsaufgaben und/oder Funktionen in der Produktionsanlage 1. Die Anlagenmodule 2 weisen Funkschnittstellen 15 auf, mittels derer Anlagenmoduldaten 8 zur Durchführung des Verfahrens bereitgestellt werden, beispielsweise an die Sicherheitsbeurteilungseinrichtung 5.

In dem Konfigurationsschritt 700 werden Umgebungsdaten 16 zur Durchführung des Verfahrens eingelesen, gesammelt und/oder von einem Benutzer bereitgestellt. Die Umgebungsdaten 7 beschreiben dabei den Anlagenraum als ein räumliches Modell. Die Umgebungsdaten 7 umfassen ferner Informationen zu Abständen und/oder Hindernissen. Ferner umfasst die Umgebungsdaten Abstände zwischen den Anlagenmodulen 2.

In dem Prozessdatensammelschritt 800 werden Daten gesammelt die den Prozess oder/die Produktion der Produktionsanlage 1 beschreiben. Beispielsweise umfassen diese Daten die Interaktion zwischen den Anlagenmodulen 2 sowie die Aufgaben von Benutzer 12 beim Betrieb. Insbesondere kann das Erfassen bzw.

Sammeln der Daten in den Schritte 600, 700 und 800 von der Sicherheitsbeurteilungseinrichtung 5 und/oder einer Software als Datensammeln automatisiert betrieben und/oder durchgeführt werden.

In dem Sicherheitsbestimmungsschritt 900 werden die gesammelten Daten analysiert und darauf basierend eine Sicherheitsbeurteilung der Produktionsanlage 1 getroffen. Die Sicherheitsbeurteilung umfasst beispielsweise eine Untersuchung auf vorhandene Gefahrenquellen. Die Sicherheitsbeurteilung kann als ein Gefahrenbericht oder als eine Sicherheitsdokumentation, die Gefahrenquellen, Höhe der Risiken und relevante Sicherheitsmaßnahmen beinhaltet ausgegeben werden.

Der Verfahrensschritt 1000 betrifft die menschliche Bewertung der computergenerierten Sicherheitsbeurteilung. Die Sicherheitsbeurteilung wird einer Person 12, insbesondere einem Sicherheitsingenieur, angezeigt, wobei die Person die Sicherheitsbeurteilung auf Richtigkeit überprüft und annehmen 15, ablehnen oder verändern 16 kann.

Wurde die Sicherheitsbeurteilung angenommen, kann die Produktionsanlage 1 routinemäßig betrieben werden. Jedoch schließt sich an den Verfahrensschritt 1000 der Verfahrensschritt 600 an, sodass bei einer Veränderung in der Produktionsanlage 1 die Verfahrensschritte 600,700, ff. erneut durchlaufen werden und die veränderte Produktionsanlage 1 einer Sicherheitsbeurteilung unterzogen wird.

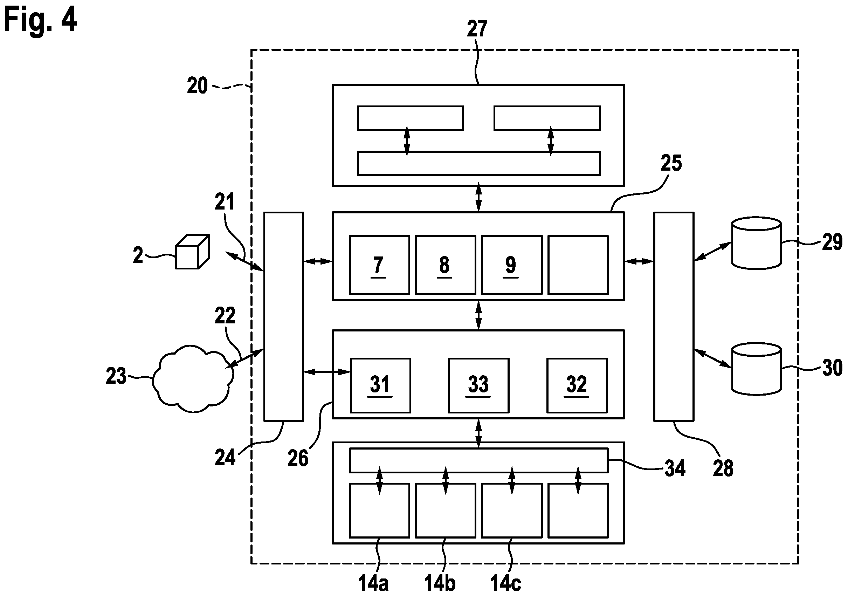

Figur 4 zeigt beispielhaft eine mögliche Softwarearchitektur zur Durchführung des Verfahrens und oder des Computerprogramms. Der Aufbau des Computerprogramms 20 umfasst mehrere Teilsoftwaremodule. Das Computerprogramm 20 ist ausgebildet, mit den Anlagemodulen 2 der Produktionsanlage 1 zu interagieren. Diese Interaktion ist als ein Datenaustausch 21 zwischen Computerprogramm 20 und Anlagenmodulen 2 ausgebildet. Bei diesem Datenaustausch 21 werden Anlagemoduldaten ausgetauscht. Ferner können mittels des Datenaustausches 21 und/oder mittels weiteren Datenaustausches Umgebungsdaten und Prozessdaten von dem Computerprogramm 20 gesammelt werden. In einem Zusatzdatenaustausch 22 können Daten von einer Cloud 23 bezogene werden oder in darin abgelegt werden. Hierzu umfasst die Software 20 ein Kommunikationsinterface 24. Das Kommunikationsinterface bildet eine virtuelle Schnittstelle zum Datenaustausch. Das Kommunikationsinterface 24 ist seinerseits mit einem Applikationsmodul 25 und einem Durchführungsmodul 26 in Datenaustausch.

Die Software 20 weist ferner ein in der Benutzerschnittstelle 27 aus, welche englischsprachig auch Userinterface genannt wird. Die Benutzerschnittstelle 27 kann beispielsweise eine Benutzeroberfläche für gängige Betriebssysteme bilden. Beispielsweise ist die Benutzerschnittstelle 27 in der Programmiersprache C# umgesetzt. In der Benutzerschnittstelle 27 sind Interaktionselemente für den Benutzer 12 insbesondere visuell dargestellt und oder umgesetzt. Ferner weist die Benutzerschnittstelle 27 eine 3D-Anzeige auf, wobei in der 3D-Anzeige eine räumliche Konfiguration der Produktionsanlage anzeigt ist und oder angezeigt wird. Ferner ist von der Benutzerschnittstelle 27 ein Benutzermanagement umfasst, bei welchen die Benutzeroberfläche bezüglich der Benutzer angepasst war und oder angepasst ist. Dabei ist sowohl die Anzeige der 3D-Anzeige der Produktionsanlage 1 insbesondere auch die Interaktionselemente vom ausgewählten Benutzerprofil abhängig.

Die Benutzerschnittstelle 27 ist datentechnisch mit dem Applikationsmodul 25 im Austausch. Beispielsweise können Applikationen und oder Vorgänge mittels der Benutzerschnittstelle 27 in dem Modul 25 startbar, konfigurierbar oder stoppbar sein. Das Applikationsmodul 25 bezeichnet und oder beschreibt Funktionen und oder Programmteile der Software zur Unterstützung und oder zu Durchführung der Risikobeurteilung. Als Risikobeurteilung wird insbesondere die Sicherheitsbeurteilung verstanden. In diesem Modul 25 werden Daten gesammelt, Daten verarbeitet und Analysemodule 14 aufgerufen. Ferner kann in diesem Modul 25 eine Informationsausgabe erfolgen. Das Applikationsmodul 25 sammelt die Daten als gesammelte Daten und hierbei insbesondere die Umgebungsdaten, die Prozessdaten und die Anlagen Moduldaten. Das Applikationsmodul 25 ist im datentechnischen Austausch mit einem Datenmanagementmodul 28. Datenmanagementmodul 28 ist ausgebildet die Daten der jeweiligen Konfiguration 29 zu speichern sowie die aus diesen Daten berechneten Daten 30, welche beispielsweise die Sicherheitsbeurteilung umfassen.

Das Applikationsmodul 25 ist mit dem Modul 26 im gartentechnischen Austausch. In der in dem Modul 26 ist eine Netzwerkmanagementmodul 31 hinterlegt, welches zum Abrufen von Daten aus der Cloud 23 ausgebildet ist. Ferner ist eine Physik-Maschine 32 hinterlegt, welche zur Durchführung von Datenanalysen und oder Simulationen ausgebildet ist. Ferner ist in diesem Modul 26 eine Bibliothek 33 hinterlegt, welche beispielsweise auf die Normen zurückgreifen kann und oder Sicherheitsstandards bzw. Analyseprotokolle hinterlegt hat.

Das Modul 26 ist im datentechnischen Austausch mit einem Analysemodulspeichermodul 34, in welchem die unterschiedlichen Analysemodule 14a, 14b, 14c und gegebenenfalls weitere hinterlegt und gespeichert sind. Aus diesem ist das jeweilige ausgewählte Analysemodul abrufbar und beziehbar. Das Modul 26 ist dann ausgebildet, basierend auf den gesammelten Daten, dem ausgewählten Modul, von der cloudbezogenen Daten und oder mittels der Physik-Maschine 32 die Sicherheitsbeurteilung durchzuführen. Die Sicherheitsbeurteilung die bestimmt wurde, kann dann über das Applikationsmodul 25 auf der Benutzerschnittstelle 27 den Benutzer 12 angezeigt werden.

## Patentansprüche

1. Verfahren zur Sicherheitsbeurteilung einer Produktionsanlage (1),
wobei die Produktionsanlage (1) mindestens ein Anlagenmodul (2, 2') aufweist, wobei das Anlagenmodul (2, 2') austauschbar ist und/oder Anlagenmodule (2, 2') ergänzbar sind, wobei das mindestens eine Anlagenmodul (2, 2') als eine Roboteranlage ausgebildet ist,
mit den softwareimplementierten Verfahrensschritten:
- Sammeln von Anlagenmoduldaten (8), Prozessdaten (9) und Umgebungsdaten (7) als gesammelte Daten,
- Analyse der gesammelten Daten zur Sicherheitsbeurteilung der vorliegenden Konfiguration mittels einer rechnergestützten Simulationseinrichtung,
wobei bei einem Austausch des Anlagenmoduls (2, 2'), einem Ergänzen und/oder Entfernern eines Anlagenmoduls (2, 2') während einer Produktion und einer Laufzeit der Produktionsanlage (1) automatisch mittels der Verfahrensschritte eine Sicherheitsbeurteilung der geänderten Produktionsanlage (1) erfolgt,
wobei die Umgebungsdaten (7) Daten eines Anlagenraums zu Hindernissen und/oder Geometrien darin oder zu Wänden umfassen,
wobei einem Benutzer (12) Anzeigedaten umfassend die Sicherheitsbeurteilung graphisch angezeigt werden, wobei nach einer Freigabe der Sicherheitsbeurteilung durch den Benutzer (12) die Produktionsanlage (1) sicher betrieben wird,
wobei die Umgebungsdaten (7) dabei den Anlagenraum als ein räumliches Modell beschreiben, wobei eine Simulation in einer 3D-Szene und/oder in einem 3D-Modell der Produktionsanlage (1) erfolgt, und wobei die Sicherheitsbeurteilung eine Analyse in Bezug auf eine Wegplanung und/oder auf eine Trajektorienplanung und/oder auf die Hindernisse enthält.

2. Verfahren nach Anspruch 1, **dadurch gekennzeichnet, dass** die Anlagenmoduldaten (8), die Prozessdaten (9) und/oder die Umgebungsdaten (7) als wiederverwendbare und/oder standardisierte Datensätze ausgebildet sind.

3. Verfahren nach Anspruch 1 oder 2, **dadurch gekennzeichnet, dass** die Anzeigedaten eine 3D-Ansicht der Produktionsanlage (1), Kontextinformationen, Datenbankinformationen und/oder Auswahloptionen umfassen.

4. Verfahren nach Anspruch 3, **dadurch gekennzeichnet, dass** Benutzerprofile auswählbar und/oder festlegbar sind, wobei die anzuzeigenden Anzeigedaten von dem ausgewählten Benutzerprofil sind.

5. Verfahren nach einem der vorherigen Ansprüche, **dadurch gekennzeichnet, dass** die gesammelten Daten für die vorliegende Konfiguration gespeichert werden und/oder dass die Sicherheitsbeurteilung gespeichert wird.

6. Verfahren nach einem der vorherigen Ansprüche, **dadurch gekennzeichnet, dass** die Analyse der gesammelten Daten zur Sicherheitsbeurteilung Analyseschritte umfasst, wobei die Analyseschritte in Analysemodulen (14a-14e) hinterlegt sind, wobei von dem Benutzer (12) ein anzuwendendes Analysemodul aus den Analysemodule (14a-14e) auswählbar ist.

7. Verfahren nach einem der vorherigen Ansprüche, **dadurch gekennzeichnet, dass** die Analyse der gesammelten Daten zur Sicherheitsbeurteilung Analyseschritte umfasst, wobei die Analyseschritte in Analysemodulen (14a-14e) hinterlegt sind, wobei ein anzuwendendes Analysemodul aus den Analysemodule (14a-14e) automatisch basierend auf Kontextinformationen ausgewählt wird.

8. Verfahren nach einem der vorherigen Ansprüche, **dadurch gekennzeichnet, dass** die Sicherheitsbeurteilung von einem Benutzer (12) bewertet, angepasst und/oder abgelehnt werden muss.

9. Computerprogramm, wobei das Computerprogramm ausgebildet ist, das Verfahren nach einem der vorherigen Ansprüche durchzuführen, wenn das Computerprogramm auf einem Rechner, einem Prozessor und/oder einer Sicherheitsbeurteilungseinrichtung (5) ausgeführt wird.

10. Maschinenlesbares Speichermedium, wobei auf dem Speichermedium das Computerprogramm nach Anspruch 9 gespeichert ist.

11. Sicherheitsbeurteilungseinrichtung (5) zur Sicherheitsbeurteilung einer Produktionsanlage (1),
wobei die Produktionsanlage (1) mindestens ein Anlagenmodul (2, 2') aufweist, wobei Anlagenmodule (2, 2') austauschbar und/oder ergänzbar sind,
mit einer Datenschnittstelle zur datentechnischen Kopplung mit mindestens einem der Anlagenmodule (2, 2'),
**gekennzeichnet durch** ein Auswertemodul, wobei das Auswertemodul ausgebildet ist, das Verfahren und/oder die Verfahrensschritte nach einem der Ansprüche 1 bis 8 durchzuführen.

12. Sicherheitsbeurteilungseinrichtung (5) nach Anspruch 11, **gekennzeichnet durch** eine Anzeigeeinheit (13) zum Anzeigen der der Anzeigedaten.

13. Sicherheitsbeurteilungseinrichtung (5) nach einem der Ansprüche 11 oder 12, **gekennzeichnet durch** eine Datenbankschnittstelle zum Beziehen von Datenbankinformationen.

## Claims

1. Method for assessing the safety of a production plant (1),
wherein the production plant (1) has at least one plant module (2, 2'), wherein the plant module (2, 2') is interchangeable and/or plant modules (2, 2') can be added, wherein the at least one plant module (2, 2') is designed as a robot plant,
having the software-implemented method steps of:
- collecting plant module data (8), process data (9) and environmental data (7) as collected data,
- analysing the collected data for the safety assessment of the present configuration by means of a computer-aided simulation device,
wherein, if the plant module (2, 2') is interchanged or if a plant module (2, 2') is added and/or removed during production and a running time of the production plant (1), a safety assessment of the modified production plant (1) is automatically carried out by means of the method steps,
wherein the environmental data (7) comprise data from a plant room on obstacles and/or geometries therein or walls,
wherein display data comprising the safety assessment are displayed graphically to a user (12), wherein the production plant (1) is operated safely after the safety assessment has been approved by the user (12),
wherein the environmental data (7) describe the plant room as a spatial model, wherein a simulation is carried out in a 3D scene and/or in a 3D model of the production plant (1), and wherein the safety assessment includes an analysis with respect to path planning and/or trajectory planning and/or the obstacles.

2. Method according to Claim 1, **characterized in that** the plant module data (8), the process data (9) and/or the environmental data (7) are formed as reusable and/or standardized data sets.

3. Method according to Claim 1 or 2, **characterized in that** the display data comprise a 3D view of the production plant (1), context information, database information and/or selection options.

4. Method according to Claim 3, **characterized in that** user profiles are selectable and/or definable, wherein the display data to be displayed are from the selected user profile.

5. Method according to one of the preceding claims, **characterized in that** the collected data for the present configuration are stored and/or **in that** the safety assessment is stored.

6. Method according to one of the preceding claims, **characterized in that** the analysis of the collected data for the safety assessment comprises analysis steps, wherein the analysis steps are stored in analysis modules (14a-14e), wherein an analysis module to be used can be selected from the analysis modules (14a-14e) by the user (12).

7. Method according to one of the preceding claims, **characterized in that** the analysis of the collected data for the safety assessment comprises analysis steps, wherein the analysis steps are stored in analysis modules (14a-14e), wherein an analysis module to be used is automatically selected from the analysis modules (14a-14e) based on context information.

8. Method according to one of the preceding claims, **characterized in that** the safety assessment must be evaluated, adapted and/or rejected by a user (12).

9. Computer program, wherein the computer program is designed to carry out the method according to one of the preceding claims when the computer program is executed on a computer, a processor and/or a safety assessment device (5).

10. Machine-readable storage medium, wherein the computer program according to Claim 9 is stored on the storage medium.

11. Safety assessment device (5) for assessing the safety of a production plant (1),
wherein the production plant (1) has at least one plant module (2, 2'), wherein plant modules (2, 2') are interchangeable and/or can be added,
having a data interface for coupling to at least one of the plant modules (2, 2') using data technology,
**characterized by** an evaluation module, wherein the evaluation module is designed to carry out the method and/or the method steps according to one of Claims 1 to 8.

12. Safety assessment device (5) according to Claim 11, **characterized by** a display unit (13) for displaying the display data.

13. Safety assessment device (5) according to either of Claims 11 and 12, **characterized by** a database interface for obtaining database information.

## Revendications

1. Procédé d'évaluation de la sécurité d'une installation de production (1),
l'installation de production (1) comportant au moins un module d'installation (2, 2'), le module d'installation (2, 2') étant interchangeable et/ou des modules d'installation (2, 2') pouvant être ajoutés, ledit au moins un module d'installation (2, 2') étant réalisé sous la forme d'une installation robotisée,
comprenant les étapes de procédé mises en œuvre par logiciel consistant à :
- collecter des données de module d'installation (8), des données de processus (9) et des données d'environnement (7) en tant que données collectées,
- analyser les données collectées pour évaluer la sécurité de la configuration existante au moyen d'un dispositif de simulation assistée par ordinateur,
lorsqu'un module d'installation (2, 2') est remplacé, lorsqu'un module d'installation (2, 2') est ajouté et/ou retiré pendant une production et pendant un temps de fonctionnement de l'installation de production (1), une évaluation de la sécurité de l'installation de production (1) modifiée est effectuée automatiquement au moyen des étapes du procédé,
les données d'environnement (7) comprenant des données d'une salle d'installation concernant des obstacles et/ou des géométries à l'intérieur de celle-ci ou concernant des murs,
des données d'affichage comprenant l'évaluation de sécurité étant présentées graphiquement à un utilisateur (12), l'installation de production (1) fonctionnant en toute sécurité après validation de l'évaluation de sécurité par l'utilisateur (12),
les données d'environnement (7) décrivant ainsi la salle d'installation sous la forme d'un modèle spatial, une simulation étant effectuée dans une scène 3D et/ou dans un modèle 3D de l'installation de production (1), et l'évaluation de la sécurité contenant une analyse relative à une planification de chemin et/ou à une planification de trajectoire et/ou aux obstacles.

2. Procédé selon la revendication 1, **caractérisé en ce que** les données de module d'installation (8), les données de processus (9) et/ou les données d'environnement (7) sont configurées sous forme d'ensembles de données réutilisables et/ou normalisés.

3. Procédé selon la revendication 1 ou 2, **caractérisé en ce que** les données d'affichage comprennent une vue en 3D de l'installation de production (1), des informations contextuelles, des informations de base de données et/ou des options de sélection.

4. Procédé selon la revendication 3, **caractérisé en ce que** des profils d'utilisateurs peuvent être sélectionnés et/ou définis, les données d'affichage à afficher provenant du profil d'utilisateur sélectionné.

5. Procédé selon l'une quelconque des revendications précédentes, **caractérisé en ce que** les données collectées sont stockées pour la configuration existante et/ou **en ce que** l'évaluation de sécurité est stockée.

6. Procédé selon l'une quelconque des revendications précédentes, **caractérisé en ce que** l'analyse des données collectées pour l'évaluation de sécurité comprend des étapes d'analyse, les étapes d'analyse étant stockées dans des modules d'analyse (14a-14e), un module d'analyse à utiliser pouvant être sélectionné par l'utilisateur (12) parmi les modules d'analyse (14a-14e).

7. Procédé selon l'une quelconque des revendications précédentes, **caractérisé en ce que** l'analyse des données collectées pour l'évaluation de sécurité comprend des étapes d'analyse, les étapes d'analyse étant stockées dans des modules d'analyse (14a-14e), un module d'analyse à utiliser étant sélectionné automatiquement parmi les modules d'analyse (14a-14e) sur la base d'informations contextuelles.

8. Procédé selon l'une quelconque des revendications précédentes, **caractérisé en ce que** l'évaluation de sécurité doit être jugée, adaptée et/ou rejetée par un utilisateur (12).

9. Programme informatique, le programme informatique étant configuré pour mettre en œuvre le procédé selon l'une quelconque des revendications précédentes lorsque le programme informatique est exécuté sur un ordinateur, un processeur et/ou un dispositif d'évaluation de la sécurité (5).

10. Support de stockage lisible par machine sur lequel est stocké le programme informatique selon la revendication 9.

11. Dispositif d'évaluation de la sécurité (5) destiné à évaluer la sécurité d'une installation de production (1),
l'installation de production (1) comportant au moins un module d'installation (2, 2'), les modules d'installation (2, 2') étant interchangeables et/ou pouvant être ajoutés,
comprenant une interface de données pour le couplage informatique avec au moins l'un des modules d'installation (2, 2'),
**caractérisé par** un module d'évaluation, le module d'évaluation étant réalisé de manière à mettre en œuvre le procédé et/ou les étapes du procédé selon l'une quelconque des revendications 1 à 8.

12. Dispositif d'évaluation de la sécurité (5) selon la revendication 11, **caractérisé par** une unité d'affichage (13) destinée à afficher les données d'affichage.

13. Dispositif d'évaluation de la sécurité (5) selon l'une quelconque des revendications 11 ou 12, **caractérisé par** une interface de base de données destinée à obtenir des informations de base de données.
